# EUROPEAN PATENT APPLICATION

(11) **EP 2 075 972 A1**
(43) Date of publication of application: **01.07.2009**
(21) Application number: 07017611.0
(22) Date of filing: 07.09.2007
(51) Int. Cl.: H04L 27/26, H04L 1/18, H04L 5/02

(54) **Transmitter**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

The invention relates to a transmitter comprising a transmitting means (101) for transmitting a transmit signal comprising a plurality of signal portions associated with different spectra and a receiving means (103) for receiving signaling information upon transmitting the transmit signal, the signaling information indicating a retransmission of a signal portion, the transmitting (101) means being configured to retransmit the signal portion.

## Description

### Field of the invention

The present invention relates the field of telecommunications and in particular to the field of signal retransmissions.

### Background

In digital communication systems, transmission errors due to noise on the channel and other effects are inevitable. One possibility to cope with therewith is to apply forward error correction (FEC) codes which add at the transmitter a certain amount of redundancy to the information to be transmitted. The resulting combination of information bits and redundancy bits is often referred to as a FEC codeword. The redundancy in the codeword allows the recovery of the original information at the receiver even if channel errors occur as long as the number of errors introduced by the channel is limited. However, one cannot rely on the FEC codes solely because, in practice, so-called error bursts occur in which the number of errors within a codeword surpasses the limit imposed by the FEC code.

In the latter mentioned case, the receiver can detect a FEC decoding error, send a NACK-message (NACK: Not ACKnowledged message) back to the transmitter via a feedback link and thereby request error transmission for the corresponding codeword. This transmission can in fact involve a retransmission of the previously transmitted codeword without any changes. Thus, the receiver may try to combine both received versions of the codeword and start another decoding attempt.

This scheme is called hybrid ARQ (HARQ: Hybrid Automated Repeat Request) type-1. The combining can either be performed by means of repetition coding or by a summation of the received channel L-values as described by D. Chase, "Code combining - A maximum-likelihood decoding approach for combining an arbitrary number of noisy packets", IEEE Transactions on Communications, 33(5), May 1985.

It is known from coding theory that longer codewords in general yield a higher coding gain since more errors can be decoded. This fact is used in the so-called HARQ type-2 scheme as described by David M. Mandelbaum, "An adaptive-feedback coding scheme using incremental redundancy", IEEE Transactions on Information Theory, 20(3), May 1974. In the initial transmission, a certain number of the codeword bits are transmitted. If decoding at the receiver fails and a NACK message is sent then some more codeword bits are transmitted during the retransmission. They are appended to the received word from the initial transmission and thus a longer codeword is available at the receiver for the next decoding attempt. The redundancy available is prolonged with each retransmission which justifies the use of the term "incremental redundancy" for the additional codeword bits transmitted within each retransmission.

Both HARQ type-1 and HARQ type-2 schemes can be repeated several times until either decoding at the receiver is successful or until a certain delay constraint is exceeded. According to the HARQ type-1 scheme, the repetition is straightforward since the same codeword is transmitted and combined repeatedly. According to the HARQ type-2 scheme, the amount of incremental redundancy is limited by the FEC code properties. A so-called mother code is chosen such that each codeword of the mother code is also a codeword of a set of sub-codes with increasing grade if an increasing number of redundancy bit positions is punctured. The mother code in this case is referred to as a rate-compatible code as described by Joachim Hagenauer in "Rate-compatible punctured convolutional codes (RCPC codes) and their applications", IEEE Com, 36(1988)4, pages 389-400. If all codeword bits are used, i.e. if the mother codeword has been transmitted and if the decoding is still not successful then further retransmissions may contain previously transmitted information- and redundancy bits which are then combined at the receiver according to e.g. to the HARQ type-1 scheme before the next decoding attempt.

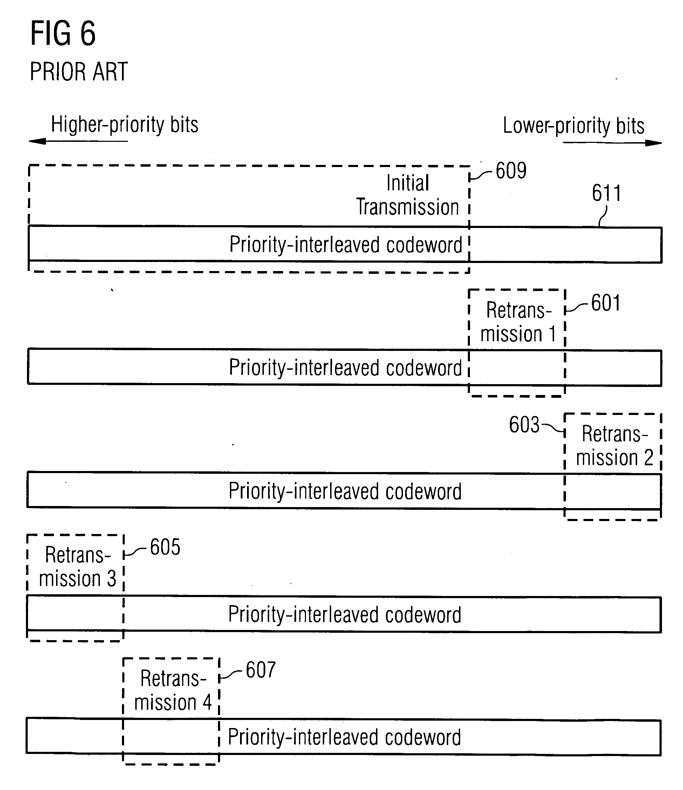

The above-described procedure is depicted in Fig. 6 indicating a first retransmission 601, a second retransmission 603, a third retransmission 605 and a fourth retransmission 607 after the initial transmission 609 with respect to a priority-codeword 611. The codeword bits depicted in Fig. 6 are priority-interleaved which means that the bits are ordered and punctured with respect to their influence on the decoding process. Thus, the higher priority bits are ordered on the left-hand side of the priority interleaved codeword 611 wherein lower priority bits are ordered on the right-hand side of the priority interleaved codeword 611. Such an ordering of codeword bits according to the decoding priority is possible for all codes with the exception of the maximum distance separable codes (MDS) for which all codeword bits have the same priority. Within the class of binary FEC codes only the repetition- and the one bit parity check codes are MDS codes. All other binary codes such as the LDPC codes and turbo codes are not MDS codes.

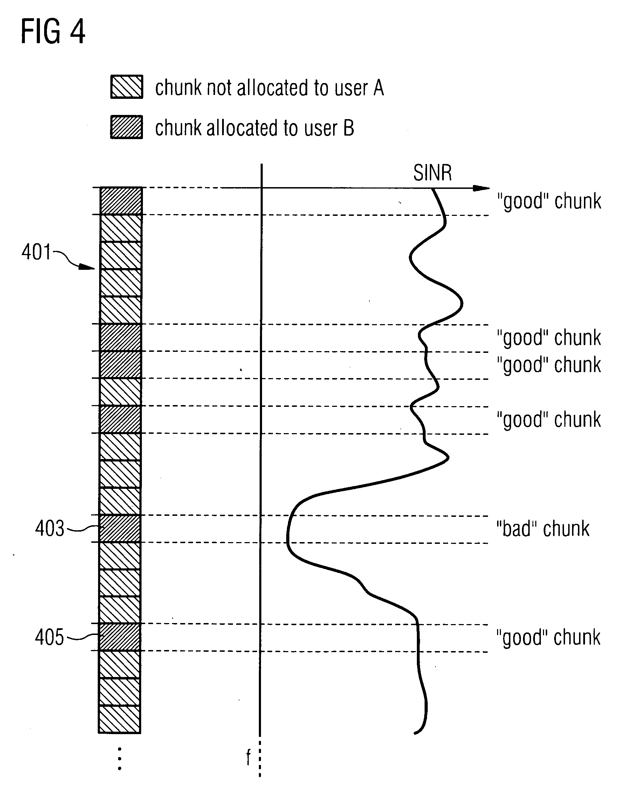

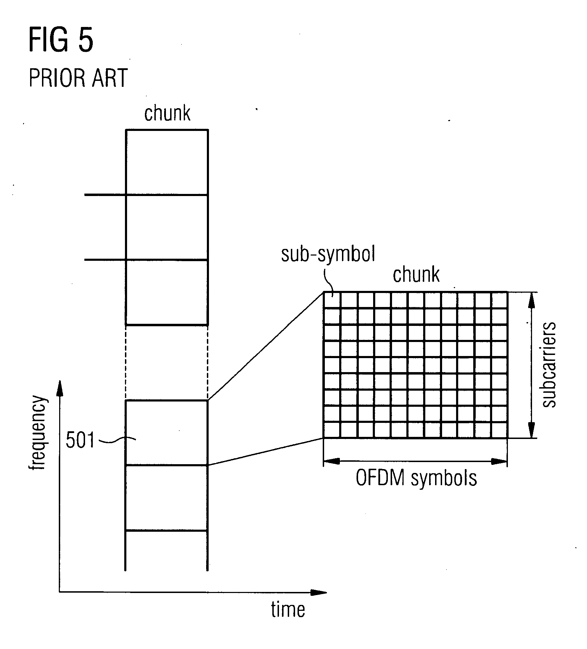

In future wireless digital communication systems based on orthogonal frequency division multiplex (OFDM), the basic resource unit allocated to a user is a chunk. A chunk is defined as a rectangular time-frequency block consisting of a fixed number of sub-carriers in the frequency dimension and a fixed number of OFDM symbol durations in the time dimension as depicted in Fig. 5. A chunk 501 may be associated with a number of sub-carriers allocated to discrete frequencies and each chunk may comprise a different set of sub-carriers so that different chunks do not overlap in the frequency. The chunks may be allocated to different users wherein the chunks allocated to a user convey symbols of a possibly chunk-dependent modulation alphabet which, in turn, contains the bits of an FEC codeword. Due to the possibly widespread location of the chunks allocated to a user over a whole OFDM bandwidth some chunks may suffer from channel effects more than other chunks i.e. they have a much lower signal to interference and noise ratio (SINR) which is depicted in Fig. 4 showing chunks 401 allocated to a user A and e.g. a chunk 403 allocated to a user B. For example, the chunk 403 allocated to the user B has an SINR which is lower than a SINR of another chunk 405 allocated to the user B. This SINR-dependency appears often in the case of bursty interference where e.g. a user from an adjacent radio cell is transmitting within the same sub-carriers and thus the symbols in the respective chunk are garbled significantly. If pilot symbols are included within the chunks then it is possible to reliably estimate the channel quality within each single chunk at the receiver. However, this information is not exploited and fed back to the transmitter in the original HARQ type-2 scheme. In contrast, first the available codeword bits of the mother codeword are transmitted in small blocks according to the incremental redundancy approach and, afterwards, the codeword is retransmitted in small blocks and combined starting again from the first and most important bit as depicted in Fig. 6.

Following the procedure of cyclically retransmitting bits after all codeword bits are used up, a possibly large number of bits are retransmitted which are already available at the receiver with a good reliability while some other bits which have not been reliably recovered are neglected in the first few retransmissions. Hence, the channel resources for the first few retransmissions are wasted and an additional and unnecessary delay until successful decoding at the receiver is introduced.

In order to adapt the transmission according to the current channel properties in advance, link adaptation technique may be employed. If e.g. the SINR of a chunk is estimated to be low then a low modulation alphabet and a low code rate are chosen to minimize the bit error probability. If a chunk is estimated to be good, a higher modulation alphabet and a higher code rate can be used to improve the overall throughput. In systems using link adaptation, the transmission can usually be adapted to estimated or predicted channel conditions with an accuracy that depends on the channel variability. However, the transmission cannot be adapted to unpredictable short-time disturbances on the channel as e.g. cochannel interference from another cell. If a chunk was estimated to be good and has experienced severe errors then many code bits are erroneously received so that successful decoding may not be possible. Additional information is then needed and HARQ can be used for performing the request. Hence, link adaptation and HARQ can efficiently be combined to adapt also the predictable as well as to unpredictable propagation conditions and thus to maximize the channel throughput.

In order to exploit the channel knowledge available at the receiver, the concept of intelligent NACKs was introduced and it has also been recently proposed for application within the EU-funded WINNER project as described in IST-4-027756-WINNER II7 deliverable D.2.2.2, link adaptation procedures. Intelligent NACKs do not only inform the transmitter about decoding errors at the receiver. Additionally, they convey information about the estimated channel conditions, e.g. the average SINR for the allocated chunks. This information is used then to accordingly select the number of redundancy bits to be transmitted in the following retransmission i.e. to select the code rate of the codewords which is available at the receiver after the retransmission.

After the transmission of the entire mother codeword and hence after having ,used the maximum number of code bits, the procedure of transmitting the average SINR in the intelligent NACKs is not as powerful as in previous transmissions. This is due to the fact that the code rate cannot be lowered further since only the amount of bits for combination can be influenced by the intelligent NACKs. However, this information is not very accurate to facilitate the decoding process. Moreover, the problem of wasted transmission resources for the transmission of bits which are already available at the receiver with good reliability is ignored in the above-mentioned described approach.

Another situation which is not considered adequately by the intelligent NACK providing information on the average SINR is the occurrence of some exceedingly bad chunks and, hence, a number of exceedingly unreliable code bits.

### Summary of the Invention

It is the object of the invention to provide an efficient retransmission concept and, in particular, to provide an efficient retransmission protocol.

This object is achieved by the features of the independent claims. Advantageous embodiments of the present invention are described by the dependent claims.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

According to an aspect, the invention relates to a transmitter for transmitting a transmit signal which is composed of signal portions allocated to different portions of the time-frequency resources, e.g. to different chunks. In multi-carrier/OFDM transmission, the chunk consists of a set of adjacent sub-carriers and consecutive MC/OFDM symbol periods. However, the transmit signal may be a signal according to the SC-FDMA (SC-FDMA: Single Carrier Frequency Division Multiplexing Access) transmission in LTE Standard, which can be seen as both single carrier and multicarrier transmission.

The transmitter may comprise a transmitting means for transmitting a transmit signal comprising a plurality of signal portions associated with different multicarrier spectra and a receiving means for receiving signaling information upon transmitting the transmit signal, the signaling information indicating a retransmission of a signal portion. In response to the signaling information, the transmitting means is configured to retransmit the signal portion e.g. via a communication network. The signal portion may e.g. be associated with at least one sub-carrier and with a certain time duration. For example, the signal portion is a chunk comprising a plurality of sub-carriers defining a multicarrier spectrum.

According to an embodiment, the transmitting means may be configured to retransmit only the signal portion which is indicated by the signaling information. According to another embodiment, the transmitting means may be configured to e.g. retransmit signal portions associated with a certain user which may comprise the signal portion indicated by the signaling information.

According to an embodiment, the transmitter may further comprise an encoder which encodes each signal portion upon a basis of an encoding scheme. For example, each signal portion may be encoded upon a basis of a different encoding scheme. However, the encoding scheme for all signal portions may be the same. The encoding scheme may e.g. be one of the known forward error correction encoding schemes.

According to an embodiment, the signaling information may further comprise information indicating a reception quality of the transmit signal or of the signal portion. The transmitter may further comprise an encoder which may comprise the features of the above-mentioned encoder and which is configured to choose a certain encoding scheme matching the reception quality and to encode the signal portion or the plurality of signal portions upon a basis of the certain encoding scheme to obtain e.g. encoded signal of a certain length.

According to an embodiment, the plurality of signal portions may comprise signal portions associated with different users, wherein the signaling information may indicate a certain signal portion being associated with a certain user. In other words, the certain signal portion associated with the certain user forms the signal portion indicated by the signaling information. The transmitting means retransmits only the certain signal portion or, alternatively, a number of signal portions associated with the certain user, the number of signal portions comprising the certain signal portion.

According to another embodiment, the signal portion to be retransmitted comprises bits having a higher priority than bits of another signal portion. According to another embodiment, a selector is provided which chooses or selects a signal portion to be fed back or to be retransmitted based on the priority of the code bits.

According to an embodiment, the plurality of signal portions may comprise a first number of signal portions associated with a first user and a second number of signal portions associated with a second user. The signal portion indicated by the signaling information may, by way of example, be e.g. a signal portion associated with the first user in order to retransmit the certain signal portion. The composing means may be configured to block the signal portions associated with the first user or to concatenate the signal portions in order to obtain a transmit frame comprising only the signal portions associated with the first user. In this case, the bandwidth required for signaling the information regarding the certain portion to be retransmitted may be reduced.

According to another embodiment, a first number of signal portions may be assigned to different multicarrier spectra at different time instants according to a spectral rule. The signaling information may e.g. indicate the signal portion within the number of signal portions. Thus, the signaling bandwidth may be reduced since the signal portion is indicated only within a certain subset of signal portions. The spectral rule may e.g. define frequency allocations the signal portions at certain time instants.

According to another aspect, the invention relates to a receiver for receiving a transmit signal comprising a plurality of signal portions associated with different multicarrier spectra. Thus, the receiver may be configured to receive the transmit signal transmitted by the transmitter according to the invention. The receiver comprises a processing means for determining a reception quality of the signal portions wherein the processing means may generate signaling information indicating a retransmission of a signal portion e.g. of a certain signal portion, being associated with a reception quality of the signal portion which is worse than a reception quality of another signal portion. The receiver further comprises a transmitting means for transmitting the signaling information e.g. to a remote transmitter having the above-described features.

The processing means may further be configured to determine a reception quality for each of the signal portions comprised by the transmitter signal. According to an embodiment, the processing means may be configured to determine a signal-to-noise ratio or a signal to interference plus noise ratio or a received signal strength e.g. only for the signal portion or for each signal portion in order to determine the reception quality.

According to an embodiment, the processing means may be configured to compare the reception quality of the signal portion with the reception quality of the other signal portion or with a reception quality threshold in order to determine whether the signal portion is to be retransmitted. The reception quality threshold may be e.g. a certain signal-to-noise ratio or a certain signal to interference plus noise ratio or a certain received signal strength.

According to an embodiment, the signal portion may be encoded upon a basis of an encoding scheme, e.g. a forward error correction encoding scheme, wherein the receiver may further comprise a decoder for decoding the signal portion upon a basis of a decoding scheme corresponding with the encoding scheme.

According to an embodiment, the plurality of signal portions may comprise signal portions associated with different users wherein the processing means may be configured to generate signaling information indicating a certain signal portion as the signal portion to be retransmitted which is associated with a certain user. Alternatively, the processing means may generate signaling information indicating a number of signal portions associated with e.g. the certain user certain user wherein the number of signal portions comprises the certain signal portion. However, when more than one chunk experience bad SINR, e.g. below a certain threshold, these chunks may also belong to different users.

According to an embodiment, the signal portion may be encoded upon a basis of a first encoding scheme wherein a further transmit signal following or preceding the transmit signal may comprise another signal portion being encoded upon a basis of a second encoding scheme. The receiver may further comprise a decoder configured to encode the signal portion upon a basis of a first decoding scheme associated with the first encoding scheme and to encode the other signal portion upon a basis of a second decoding scheme associated with the second encoding scheme. For example, the decoder may be configured to adapt the decoding scheme to the currently employed encoding scheme in the transmitter.

According to an embodiment, the plurality of signal portions may comprise a first number of signal portions associated with a first user and a second number of signal portions associated with a second user. The processing means may be configured to generate signaling information indicating a retransmission of a composed signal, e.g. of a blocked signal, comprising the first number of signal portion or a sub-number of signal portions associated with the first user.

According to an embodiment, the first number of signal portions may be assigned to different multicarrier spectra and different time instants according to a spectral rule. The processing means may generate signaling information indicating the signal portion within the number of signal portion in order to e.g. reduce the signaling bandwidth.

According to an embodiment, wherein the processing means is configured to determine a first parameter for a first signal portion based on a reception quality and on a priority of bits of the first signal portion, a second parameter for a second signal portion based on a reception quality and on a priority of bits of the second signal portion, to compare the first parameter with the second parameter and to generate the signaling information indicating a retransmission of the first signal portion or of the second signal portion based on a result of the comparison. The processing means may be configured to determine the first and the second parameter using a weighting function in order to find a minimum or a maximum value forming the respective parameter. For example, the respective signal portion associated with the minimum or maximum signal value may be retransmitted. Thus, the signal portion to be retransmitted is determined upon a basis of two criteria: reception quality and priority of the bits contained in the signal portion.

The invention further relates to a transmission method for transmitting a signal, e.g. a multicarrier signal, with transmitting a transmit signal comprising a plurality of signal portions associated with different multicarrier spectra, receiving signaling information upon transmitting the transmit signal, the signaling information indicating a retransmission of a signal portion and retransmitting the signal portion. Further steps of the transmission method correspond to the functionality of the inventive transmitter.

The invention further relates to a reception method for receiving a transmit signal comprising a plurality of signal portions associated with different spectra, e.g. different multicarrier spectra. The reception method comprises determining a reception quality of the signal portions, generating signaling information indicating a retransmission of a signal portion being associated with a reception quality of the signal portion which is worse than a reception quality of another signal portion and transmitting the signaling information to e.g. a remote transmitter. Further steps of the inventive reception correspond to the functionality of the inventive receiver.

The invention further relates to a computer program for performing at least one of the inventive methods when the computer program runs on a computer.

According to the invention, the signal portion may be a chunk associated with the OFDM or with any multicarrier transmission scheme. Furthermore, the transmit signal may be arranged to form a signal frame comprising a plurality of chunks. Thus, instead of retransmitting the signal frame, only certain signal portions, e.g. only certain chunks, may be retransmitted which significantly reduces the retransmission bandwidth.

### Brief Description of the Drawings

Further embodiments of the present invention will be described with respect to the following figures in which:
Fig. 1 shows a block diagram of a transmitter;
Fig. 2 shows a block diagram of a receiver;

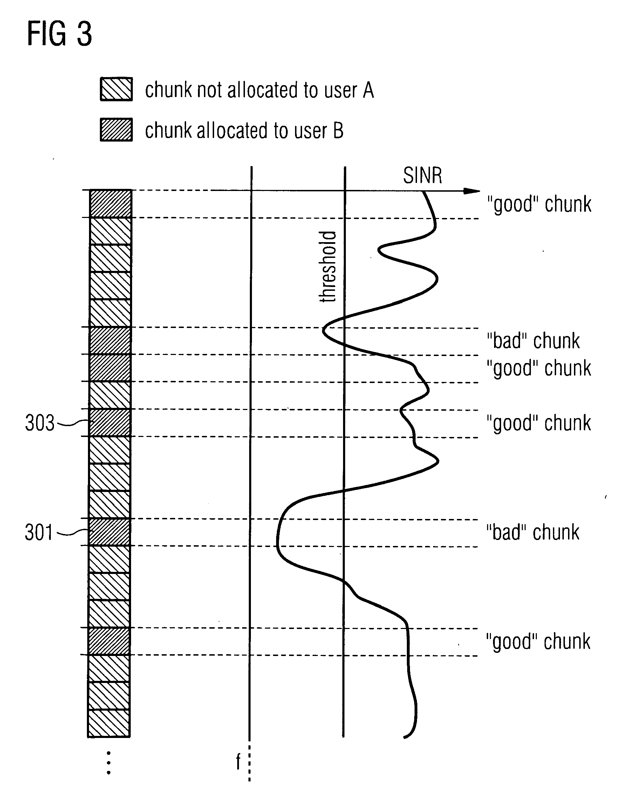

Fig. 3 shows the SINR for a plurality of chunks;
Fig. 4 shows the SINR for a plurality of chunks;
Fig. 5 demonstrates a chunk; and
Fig. 6 demonstrates a retransmission scheme.

### Detailed Description

It is noted that in different figures, similar or identical elements are provided with the same reference signs or with reference signs, which are different from the corresponding reference signs only within the first digit.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

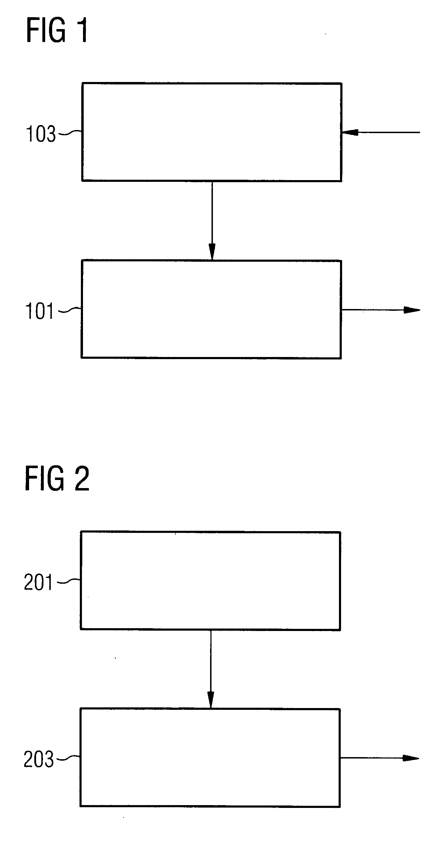

Fig. 1 shows an inventive transmitter comprising a transmitting means 101 for transmitting a transmit signal and a receiving means 103 for receiving signaling information. The receiving means 103 is coupled to the transmitting means 101 and provides to the same e.g. the signaling information mentioned above.

Fig. 2 shows an inventive receiver comprising a processing means 201 for determining a reception quality of the signal portions received by e.g. a receiving means not depicted in Fig. 2 and for generating signaling information. The receiver further comprises a transmitting means 203 for transmitting the signaling information to e.g. a remote receiver, wherein the processing means 201 is coupled to the transmitting means 203 for providing the signaling information.

According to the invention, intelligent NACKs may be utilized in order to inform the transmitter which signal portion, e.g. which chunk, suffered most from the channel influence. Under the assumption that a total bandwidth, e.g. OFDM bandwidth, is divided into approximately 2^{k} chunks, intelligent NACKs of length ceil(k) bits are sufficient to uniquely address each chunk within the intelligent NACKs.

In case of a decoding error at the receiver, incremental redundancy may further be requested and transmitted. However, if the receiver detects a chunk in the initial transmission which suffered exceedingly from the channel, then the inventive intelligent NACKs e.g. containing indices of specific chunks may be employed. In this case, the transmitter may retransmit the bits contained in the signal portion, e.g. in the chunk, whose index was signaled back via the signaling information, e.g. via the intelligent NACK. According to an embodiment, if the allocated length of the retransmission allows for it, some additional incremental redundancy can be included as well.

More specifically, the receiver shown in Fig. 2 may estimate which signal portion, e.g. which chunk, had the worst SINR e.g. in the transmission of the mother codeword. Then, the receiver may include the index of the specific chunk in the intelligent NACK. Alternatively, a received SINR threshold forming a quality threshold may be introduced and the intelligent NACK may contain the indices of all chunks experiencing the SINR below that threshold.

Furthermore, in order to reduce the signaling overhead of the intelligent NACK, if several chunks suffered from a comparable bad channel, i.e. if they fall below a certain threshold, and the decision for the worst chunk is ambiguous then it may be decided which chunks contents may preferably be retransmitted first in order to maximize a chance of a decoding success in the next step. In this case, the priorities of the bit positions within the codewords represent an indicator for this decision and the receiver chooses to feed back the index or the indices of the bad chunks carrying the highest priority bits.

This procedure is more goal-oriented than the state-of-the-art approaches since first retransmission occurs for the bits whose reliability or relative reliability with respect to the importance in the decoding process is worst. Additional redundancy is transmitted simultaneously with first retransmission only if the allocated retransmission length allows for it. Otherwise it is transmitted afterwards. If (e.g. after transmission the mother codeword) decoding is still not possible then the code bits are cyclically retransmitted according to their priority.

According to the state-of-the-art, the intelligent NACK is used to feedback only an average SINR value over all allocated chunks and the length of the following retransmission is adjusted based thereon. In contrast, the inventive approach focuses on the location of the worst errors by exploiting the information e.g. about the quality (SINR) of single signal portions or chunks which is available at the receiver. This yields a significant improvement in the utilization of intelligent NACKs.

The intelligent NACKs according to the invention forming an embodiment of a signaling information can be extended by a few bits in order to emulate the behavior of the traditional schemes mentioned above and to allow adaptation of the retransmission length according to the average SINR of the previous transmission. More specifically, the intelligent NACKs contain both bad chunk indices and average SINR information to allow the transmitter to retransmit bad bits and adjust the retransmission length at the same time.

If e.g. k bits are not available for intelligent NACKs because of overhead considerations and if the length of a retransmission is greater than an integer multiple of one chunk then the set of allocated chunks to a user could be divided in a certain number of blocks matching the retransmission length and the index of the block containing the worst chunk could be signaled back to the transmitter instead of the chunk index of the worst chunk itself.

If the locations of the allocated chunks to a user are known due to the particular multiple access scheme used, e.g. block interleaved OFDMA as e.g. in the WINNER non-frequency adaptive transmission mode, another way to reduce the length of the intelligent NACKs is feasible. The chunks are well-dispersed over frequency according to e.g. a certain rule wherein e.g. every b-th chunk is used. Instead of signaling the global index of the worst chunk within the frame it is sufficient to signal the local index of the chunk within the sets of the non-frequency adaptive chunks which might significantly reduce the length of the intelligent NACKs.

The use of unreliable code bits in the decoding process and the unnecessary retransmission of bits which are already available at the receiver with a high reliability have large influence on the spectral efficiency which is defined as the ratio of information bits to transmitted symbols and delay of HARQ type-2 systems. By jointly exploiting the knowledge of channel quality on single allocated chunks in the previous transmission and the assumed prioritization of transmitted coded bits known to both transmitter and receiver, the receiver can feedback an intelligent NACK containing the index or the indices of the worst chunks so that the transmitter can precisely retransmit those bits which maximize the chance of a decoding success in the next step. This results in an improved spectral efficiency as well as in a smaller average transmission delay.

The implementation of the inventive scheme does not introduce any further requirements besides the transmission of intelligent NACKs. In a system where intelligent NACKs are used to feed back average SINR information, only the payload of the intelligent NACKs has to be changed from average SINR values to chunk indices if an exceedingly bad signal portion is detected.

In a system where both average SINR information and bad chunk indices are used, the length of an intelligent NACK has to be extended to allow for enough space for both.

If an additional interleaver besides the priority interleaver is used to distribute the bits of a codeword or a retransmission over all allocated chunks then both the transmitter and the receiver may keep track about its state until it is clear to both which chunk experienced the worst SINR. Afterwards, only the concerning part of the interleaver map needs to be buffered until the reception of an ACK, wherein the remainder of the interleaver map can safely be discarded.

The inventive scheme is applicable to frequency adaptive transmission as well to non-frequency adaptive transmission as long as pilot symbols are contained within the chunks to allow estimation of the actual channel quality. For a typical multiple access scheme used for non-frequency adaptive transmission, the required NACK overhead can further be reduced as described above.

### List of reference signs:

- 101: transmitting means
- 103: receiving means
- 201: processing means
- 203: transmitting means
- 301: bad chunk
- 303: good chunk
- 401: chunks
- 403: bad chunk
- 405: good chunk
- 501: chunk
- 601: retransmission
- 603: retransmission
- 605: retransmission
- 607: retransmission
- 609: Initial transmission
- 611: priority-interleaved codeword

## Claims

1. Transmitter, comprising:
a transmitting means (101) for transmitting a transmit signal comprising a plurality of signal portions associated with different spectra; and
a receiving means (103) for receiving signaling information upon transmitting the transmit signal, the signaling information indicating a retransmission of a signal portion;
the transmitting (101) means being configured to retransmit the signal portion.

2. The transmitter according to claim 1, the plurality of signal portions being associated with different multicarrier spectra, the signal portion being associated with at least one subcarrier of a multicarrier transmission scheme.

3. The transmitter according to claim 1 or 2, the signal portion to be retransmitted comprising bits having a higher priority than bits of another signal portion.

4. The transmitter according to anyone of the claims 1 to 3, further comprising an encoder being configured to encode each signal portion upon a basis of an encoding scheme.

5. The transmitter according to anyone of the claims 1 to 4, the signaling information further comprising information indicating a reception quality of the transmit signal, the transmitter further comprising an encoder being configured to chose a certain encoding scheme matching the reception quality and to encode the signal portion or the plurality of signal portions upon a basis of the certain encoding scheme.

6. The transmitter according to anyone of the claims 1 to 5, the plurality of signal portions comprising signal portions associated with different users, the signaling information indicating a certain signal portion being associated with a certain user, the transmitting means (101) being configured to retransmit the certain signal portion or a number of signal portions associated with the certain user, the number of signal portions comprising the certain signal portion.

7. The transmitter according to anyone of the claims 1 to 6, the plurality of signal portions comprising a first number of signal portions associated with a first user and a second number of signal portions associated with a second user, the signal portion being associated with the first user, the transmitter further comprising a composing means being configured to compose the first number of signal portions or a sub-number of signal portions associated with the first user to obtain a composed signal, the transmitting means (101) being configured to retransmit the composed signal in order to retransmit the certain signal portion.

8. The transmitter according to anyone of the claims claim 1 to 7, a number of signal portions being assigned to different multicarrier spectra at different time instants according to a spectral rule, the signaling information indicating the signal portion within the number of signal portions, the transmitting means (101) being configured to retransmit the certain signal portion or the first number of signal portions.

9. Receiver for receiving a transmit signal, the transmit signal comprising a plurality of signal portions associated with different spectra, in particular with different multicarrier spectra, the receiver comprising:
a processing means (201) for determining a reception quality of the signal portions, the processing means (201) being configured to generate signaling information indicating a retransmission of a signal portion being associated with a reception quality of the signal portion being worse than a reception quality of another signal portion; and
a transmitting means (203) for transmitting the signaling information.

10. The receiver according to claim 9, the processing means (201) being configured to determine a signal to noise ratio or a signal to interference plus noise ratio or a received signal strength in order to determine the reception quality.

11. The receiver according to claim 9 or 10, the processing means (201) being configured to compare the reception quality of the signal portion with the reception quality of the other signal portion or with a reception quality threshold, in particular with a certain signal to noise ratio or with a certain signal to interference plus noise ratio or with a certain received signal strength.

12. The receiver according to anyone of the claims 9 to 11, the signal portion being encoded upon a basis of an encoding scheme, the receiver further comprising a decoder for decoding the signal portion upon a basis of a decoding scheme corresponding with the encoding scheme.

13. The receiver according to anyone of the claims 9 to 12, the plurality of signal portions comprising signal portions associated with different users, the processing means (201) being configured to generate signaling information indicating a certain signal portion being associated with a certain user or a number of signal portions associated with the certain user, the number of signal portions comprising the certain signal portion.

14. The receiver according to anyone of the claims 9 to 13, the signal portion encoded upon a basis of a first encoding scheme, a further transmit signal following the transmit signal comprising another signal portion being encoded upon a basis of a second encoding scheme, the receiver comprising a decoder being configured to decode the signal portion upon a basis of a first decoding scheme associated with the first encoding scheme and to decode the other signal portion upon a basis of a second decoding scheme associated with the second encoding scheme.

15. The receiver according to anyone of the claims 9 to 14, the plurality of signal portions comprising a first number of signal portions associated with a first user and a second number of signal portions associated with a second user, the processing means (201) being configured to generate signaling information indicating a retransmission of a composed signal comprising the first number of signal portions or a sub-number of signal portions associated with the first user.

16. The receiver according to anyone of the claims 9 to 15, a number of signal portions being assigned to different multicarrier spectra at different time instants according to a spectral rule, the processing means (201) being configured to generate signaling information indicating the signal portion within the number of signal portions.

17. The receiver according to anyone of the claims 9 to 16, processing means (201) being configured to choose the signal portion for which to require the retransmission based on the priority of bits in a decoding process.

18. The receiver according to anyone of the claims 9 to 17, the processing means (201) being configured to determine a first parameter for a first signal portion based on a reception quality and on a priority of bits of the first signal portion, a second parameter for a second signal portion based on a reception quality and on a priority of bits of the second signal portion, to compare the first parameter with the second parameter and to generate the signaling information indicating a retransmission of the first signal portion or of the second signal portion based on a result of the comparison.

19. The receiver according to claim 18, the processing means (201) being configured to determine the first and the second parameter using a weighting function.

20. Transmission method, comprising:
transmitting a transmit signal comprising a plurality of signal portions associated with different spectra, in particular with different multicarrier spectra;
receiving signaling information upon transmitting the transmit signal, the signaling information indicating a retransmission of a signal portion; and
retransmitting the signal portion.

21. Reception method for receiving a transmit signal, the transmit signal comprising a plurality of signal portions associated with different spectra, in particular with different multicarrier spectra, the reception method comprising:
determining a reception quality of the signal portions; generating signaling information indicating a retransmission of a signal portion being associated with a reception quality of the signal portion being worse than a reception quality of another signal portion; and
transmitting the signaling information.

22. Computer program for performing the method according to claim 20 or 21 when the computer program runs on a computer.
